# EUROPEAN PATENT APPLICATION

(11) **EP 4 354 766 A1**
(43) Date of publication of application: **17.04.2024**
(21) Application number: 22200701.5
(22) Date of filing: 11.10.2022
(51) Int. Cl.: H04B 17/318, H04B 17/382, H04B 17/309, H04W 64/00, H02J 50/00, H04W 4/029, H04W 36/32, H04W 48/16, H04W 48/18

(54) **A CIRCUITRY FOR DETECTING WIRELESS NETWORKS**

(71) Applicant: Sodaq Engineering B.V., 1211 BL Hilversum (NL)
(72) Inventor: Dagan, Itay, 1181 PL Amstelveen (NL); Sathish Kumar, Barath Kumar, 625020 Madurai (IN)
(74) Representative: IP HILLS NV

(57) **Abstract**

Example embodiments relate to a circuitry (210) for detecting at least one wireless network within range for communication, wherein the at least one wireless network is characterized by an operating frequency band. The circuitry (210) comprises at least one antenna (211) configured to receive a signal (220) within the operating frequency band; an energy sampling circuitry (212) configured to convert the received signal into an electrical charge, and to store the electrical charge in at least one buffer (213); and a sensing circuitry (214) configured to measure the stored electrical charge in the at least one buffer, and to detect that the at least one wireless network is within range for communication based on the measured electrical charge.

## Description

### Field of the Invention

The present invention generally relates to detecting wireless networks.

### Background of the Invention

An Internet of things, loT, device may be any device that connects to a network and has the ability to process and/or transmit data. IoT devices are typically powered by a battery and connect to a wireless network, e.g. an loT tracker that tracks the geographical location of an asset.

IoT devices may switch between a plurality of wireless networks when mounted to a moving asset, e.g. an loT tracker mounted to a freight container, as the moving asset travels through the coverage area of different wireless networks. The moving asset may further travel through areas with limited coverage, areas without coverage, or areas where wireless communication is prohibited. This may for example occur when the asset is transported through remote rural areas, on a vessel at sea, or in an airborne airplane.

Typically, loT devices scan and/or probe for available networks when network connection is lost or interrupted, or when network connection is poor. This scanning and/or probing for wireless networks consumes a substantial amount of energy, which can reduce the battery life of the loT device. Additionally, attempting to transmit a message without an available network, or failing to transmit a message due to a poor network connection can further consume unnecessary energy.

### Summary of the Invention

It is an object of the present invention, amongst others, to solve or alleviate the above identified problems and challenges by providing a circuitry for detecting a wireless network within range for communication with limited energy consumption.

According to a first aspect, this object is achieved by a circuitry for detecting at least one wireless network within range for communication, wherein the at least one wireless network is characterized by an operating frequency band. The circuitry comprises at least one antenna configured to receive a signal within the operating frequency band; an energy sampling circuitry configured to convert the received signal into an electrical charge, and to store the electrical charge in at least one buffer; and a sensing circuitry configured to measure the stored electrical charge in the at least one buffer, and to detect that the at least one wireless network is within range for communication based on the measured electrical charge.

The at least one antenna continuously senses for the presence of signals within the operating frequency band of at least one wireless network. The at least one antenna may be an omnidirectional antenna or a directional antenna. The signal may be a radio signal of a wireless telecommunications network transmitted by, for example, an access point, a cellular base station, or a communications satellite. The at least one wireless network may, for example, be a cellular network, a Wi-Fi network according to an IEEE 802.11 standard, or a Bluetooth network according to an IEEE 802.15 standard. The signal may be characterized by a signal frequency within the operating frequency band of the at least one wireless network. Receiving a signal may induce an oscillating voltage in the at least one antenna. By the energy sampling circuitry, the induced voltage is converted to an electrical charge, e.g. a direct voltage, that is stored in the at least one buffer. The at least one buffer may, for example, be a capacitor, a supercapacitor, a double-layer capacitor, a pseudo-capacitor, or any other energy buffer known to the skilled person.

As such, receiving a signal of the at least one wireless network results in a stored electrical charge in the at least one buffer. The electrical charge may be indicative for a strength of the received signal, a time period during which signals within the operating frequency band are received, and/or the number of received signals within the operating frequency band. By the stored electrical charge, the sensing circuitry detects if a wireless network is within range for communication. This allows detecting wireless networks within range for communication in a substantial energy-neutral way, i.e. without consuming energy to probe or scan for the presence of wireless networks. It is an advantage that this reduces the energy consumption to detect wireless networks. The circuitry further allows detecting the at least one wireless network by sampling a limited amount of energy from the received signal. This has the further advantage that the circuitry can detect a wireless network substantially quick and/or from a substantially great distance from the source of the signal, e.g. a cellular base station.

Detecting that the at least one wireless network is within range for communication may further allow the circuitry to initiate a joining procedure to join or connect with the detected at least one wireless network, or to transmit a message over the at least one wireless network. Alternatively, the circuitry may generate a control signal that triggers another device, system, or circuitry to initiate the joining procedure or to transmit a message. This has the further advantage that transmitting messages when no wireless network is available can be avoided, thereby further reducing energy consumption.

According to an embodiment, the sensing circuitry may further be configured to detect that the at least one wireless network is within range when the measured electrical charge exceeds a minimum threshold.

The minimum threshold may be an electrical charge indicative for a minimum signal strength of the at least one wireless network. This allows to only initiate a network joining procedure to join the detected at least one wireless network, or to only send a message over the at least one wireless network, when the signal strength is sufficient, i.e. when the connection to the wireless network can be sufficiently performant. This has the further advantage that it improves the energy efficiency of joining wireless networks as futile network joining procedures can be avoided, and/or that it improves the energy efficiency of communicating over wireless networks as failed transmissions can be avoided.

According to an embodiment, the sensing circuitry may further be configured to detect that the at least one wireless network is within range based on a transient response of the measured electrical charge.

The at least one wireless network may thus be detected based on a change in the electrical charge of the at least one buffer, i.e. based on the transient response of the electrical charge. The at least one wireless network may, for example, be detected to be within range for communication when the electrical charge of the at least one buffer increases by a predetermined voltage within a predetermined period of time, or when a change of the electrical charge per unit of time exceeds a threshold. This can allow to only initiate a network joining procedure or to only transmit a message when the at least one wireless network is within range for communication for a sufficient period of time, further improving energy efficiency.

According to an embodiment, the sensing circuitry may further be configured to determine a network quality of the at least one wireless network based on the measured electrical charge.

The sensing circuitry may thus be configured to determine the performance of the at least one wireless network based on the electrical charge stored in the at least one buffer. The network quality may, for example, be indicative for the stability and/or strength of the network. This allows to only initiate a network joining procedure to join the detected at least one wireless network, or to only transmit a message, when the network quality of the detected at least one wireless network is sufficient. This has the further advantage that it improves the energy efficiency of joining wireless networks as futile network joining procedures can be avoided, and/or that it improves the energy efficiency of communicating over wireless networks as failed transmissions can be avoided.

According to an embodiment, the received signal may further be characterized by a signal strength; and the sensing circuitry may further be configured to determine the network quality based on a predetermined mapping between the signal strength of the received signal and the measured electrical charge.

The predetermined mapping may be obtained by tuning or initializing the circuitry prior to the detecting of wireless networks by the circuitry, i.e. prior to operation of the circuitry. Tuning or initializing the circuitry may comprise exposing the circuitry to one or more benchmark signals with respective predetermined signal strengths, and logging the resulting electrical charge stored in the at least one buffer. The predetermined mapping may, for example, be a look-up table comprising the results of tuning the circuitry. Alternatively or complementary, the predetermined mapping may be a predetermined relationship between the signal strength, the electrical charge stored in the at least one buffer based on the results of tuning the circuitry. The predetermined mapping may be substantially independent of the frequency of the received signal, and thus independent of the operating frequency band of the detected wireless network. This can allow the circuitry to detect any wireless network within range for communication by tuning the circuitry for at least one frequency band.

According to an embodiment, the predetermined mapping may be characterized by the at least one antenna, the at least one buffer, and the energy sampling circuitry.

According to an embodiment, the at least one antenna may be tuneable to receive signals within different operating frequency bands; and wherein the circuitry may further be configured to detect a plurality of wireless networks by tuning the at least one antenna to receive signals within the respective operating frequency bands; and wherein the circuitry is further configured to identify the detected wireless networks.

In other words, the at least one antenna may be configured to receive signals of different wireless networks by tuning the at least one antenna to the operating frequency bands of the respective wireless networks. As such, the detected wireless network may be identified based on the operating frequency band wherein a signal is received. This has the further advantage that the circuitry can be configured to detect wireless networks in different geographical regions, as the commonly used operating frequency bands for telecommunication networks may vary across the globe.

According to an embodiment, the energy sampling circuitry may further comprise a rectifier and a plurality of matching networks, wherein the respective matching networks are configured to match an impedance of the at least one antenna with an impedance of the rectifier; and wherein the energy sampling circuitry is further configured to switch between the respective matching networks to tune the at least one antenna to receive signals within the respective operating frequency bands.

The rectifier may convert the oscillating voltage of the at least one antenna, induced by receiving a signal, to a direct voltage that is stored in the at least one buffer, i.e. the electrical charge. The rectifier may be connected to the at least one antenna by one of the plurality of matching networks. The respective matching networks may be associated with respective operation frequency bands of different wireless networks. As such, switching between the respective matching networks that connect the rectifier to the at least one antenna allows to tune the at least one antenna to receive signals within different operating frequency bands.

According to an embodiment, the at least one antenna may be an omnidirectional antenna, the at least one buffer may be a capacitor, and the sensing circuitry may further be configured to measure a voltage of the capacitor.

Detecting if the at least one wireless network is within range for communication by means of an omnidirectional antenna allows to receive signals of the at least one wireless network without prior knowledge of the location of the origin or source of the signal. This has the further advantage that it can improve the probability of detecting the at least one wireless network.

According to an embodiment, the at least one antenna may have a substantially rectangular shape having a length of at least around 1mm to at most around 60mm, a length of at least around 1mm to at most around 40mm, and a thickness of at least around 0.1mm to at most around 5mm.

As such, the circuitry may be substantially compact, which allows implementing the circuitry in small devices, e.g. loT trackers.

According to an embodiment, the operating frequency band may be a cellular frequency band according to a 3GPP standard, a frequency band according to an IEEE 802.11 standard, and/or a frequency band according to an IEEE 802.15 standard.

A cellular frequency band according to a 3GPP standard may, for example, be a Code-Division Multiple Access, CDMA, frequency band, a Global System for Mobiles, GSM, frequency band, a Universal Mobile Telecommunications Service, UMTS, frequency band, a Long-Term Evolution, LTE, frequency band, or a 5G New Radio, NR, frequency band. A frequency band according to an IEEE 802.11 standard may be any frequency band used by wireless local area networks, WLAN, computer communications such as, for example, Wi-Fi 4, Wi-Fi 5, Wi-Fi 6, Wi-Fi 6E, Wi-Fi 7, 60GHz Wi-Fi, Wi-Fi Direct, or Wi-Fi Protected Access. A frequency band according to an IEEE 802.15 standard may be any frequency band used by wireless personal area networks, WPAN, such as, for example, a Bluetooth network, a Bluetooth low energy, BLE, network, or a Zigbee network.

According to a second aspect, the invention relates to a tracking device comprising a communication module for communicating spatial information over a wireless network; and comprising the circuitry according to the first aspect to detect a wireless network within range for communication.

The tracking device may be a battery-powered Internet of Things, loT, device that connects to a wireless network to transmit data. The transmitted data may include the geographical location of the tracking device, i.e. spatial information. As such, connecting or associating the tracking device with a moving asset allows tracking the location and movement of the asset. The tracking device may, for example, be mounted to a freight container transported by a vessel, cargo transported by an airplane, or a package transported by a truck.

By the circuitry, a wireless network within range for communication can be detected in an energy-neutral way, i.e. without consuming energy of the tracking device's battery by probing or scanning for the presence of wireless networks. In other words, the communication module may only consume energy for communicating with, or joining a wireless network when the circuitry detects a wireless network within range for communication. This allows limiting the energy consumption of the tracking device, thereby prolonging battery life. It is a further advantage that the cost of a tracking device can be reduced as the limited energy consumption allows using a battery with a smaller battery capacity.

According to an embodiment, the circuitry may further be configured to power up the communication module from a standby mode upon detecting at least one wireless network within range for communication.

The standby mode may be an operational state wherein the communication module conserves power when not in use. By the circuitry, the communication module may operate in this energy-efficient standby mode until a suitable wireless network is detected within range for communication. Upon detection thereof, the circuitry may wake up the communication module to send a message or initiate a joining procedure to connect to the wireless network. This has the advantage that it further reduces the energy consumption of the tracking device.

According to an embodiment, the circuitry may further be configured to prevent interference between the communication of the tracking device and a critical wireless network by supressing communication by the communication module upon detecting that the critical wireless network is within range.

A critical wireless network may, for example, be a telecommunications network of emergency services, first responders, law enforcement, medical services, aeronautical services, or any other essential communications network known by the skilled person. Upon detection of such a critical wireless network, the circuitry may supress communication by the communication module. This supressing may include preventing the communication module to transmit messages over the critical wireless network, to join the critical wireless network, and/or to transmit messages over another wireless network.

### Brief Description of the Drawings

Fig. 1 shows examples of typical procedures for joining a wireless telecommunications network;
Fig. 2 shows a circuitry for detecting at least one wireless network within range for communication according to an embodiment;
Fig. 3A shows an example embodiment of an electrical charge stored in at least one buffer of the circuitry;
Fig. 3B shows an example embodiment of a predetermined mapping between the electrical charge measured on the at least one buffer of the circuitry, the signal strength of a received signal, and a corresponding network quality;
Fig. 4 shows a circuitry configured to detect a plurality of wireless networks within range for communication, according to an embodiment; and
Fig. 5 shows an example embodiment of a tracking device comprising the circuitry for detecting at least one wireless network within range for communication, and an example wherein the tracking device is mounted to a freight container.

### Detailed Description of Embodiment(s)

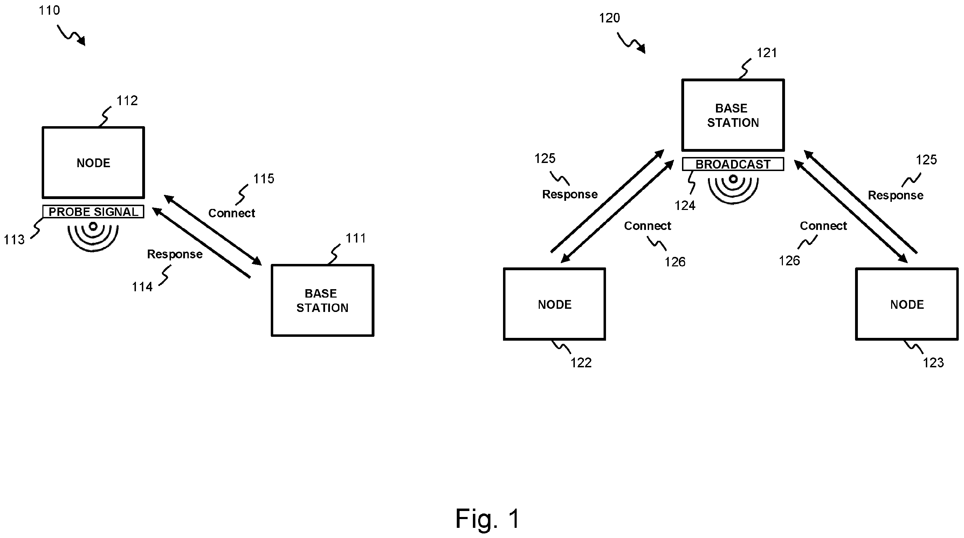

Fig. 1 shows examples 110, 120 of typical procedures for detecting and joining a wireless telecommunications network. A wireless telecommunications network typically comprises a base station 111, 121 that connects one or more nodes 112, 122, 123 to the network by means of a wireless data connection. Such a wireless telecommunications network may, for example, be a cellular network, a wireless local area network, WLAN, a wireless personal area network, WPAN, a wireless sensor network, a satellite communication networks, a terrestrial microwave network, or any other telecommunications network known by the skilled person. The nodes 112, 122, 123 may for example include, amongst others, laptops, smartphones, tablets, printers, or Internet of Things, loT, devices. The base station 111, 121 may for example be, amongst others, a cellular base station or an access point.

The procedure of detecting a wireless network within range for communication typically relates to the type of network. An example of two typical procedures 110, 120 are described hereafter. In a first example procedure 110, the node 112 periodically transmits a probing signal 113 to probe for base stations 111 within range for communication. Upon receiving such a probing signal 113, the base station 111 responds 114 to notify the node 112 of the presence of the wireless network. Hereafter, one or more additional steps may follow to connect node 112 to base station 111 and thus the wireless network, e.g. by an exchange of one or more messages 115. An example of such a joining procedure 110 is active scanning in Wi-Fi networks according to an IEEE 802.11 standard.

In a second example procedure 120, the base station 121 may periodically broadcast 124 its presence to nearby nodes 122, 123 within range for communication. Nodes 122, 123 may continuously scan for such a broadcast signal 124, e.g. a beacon frame. Upon detecting the broadcast signal 124 nodes 122, 123 may acknowledge detection by sending a response 125 to the base station 121. Hereafter, one or more additional steps may follow to connect node 122, 123 to base station 121 and thus the wireless network, e.g. by an exchange of one or more messages 115. An example of such a joining procedure 120 is passive scanning in Wi-Fi networks according to an IEEE 802.11 standard.

Such scanning 120 or probing 110 to detect a wireless network within range for communication typically consumes a non-negligible amount of energy, in particular when the node 112, 122, 123 is a battery-powered device such as, for example, an loT device. Additionally, attempting to transmit a message without an available network, or failing to transmit a message due to a poor network connection may consume unnecessary energy. It may thus be desirable to detect a wireless network within range for communication with limited energy consumption.

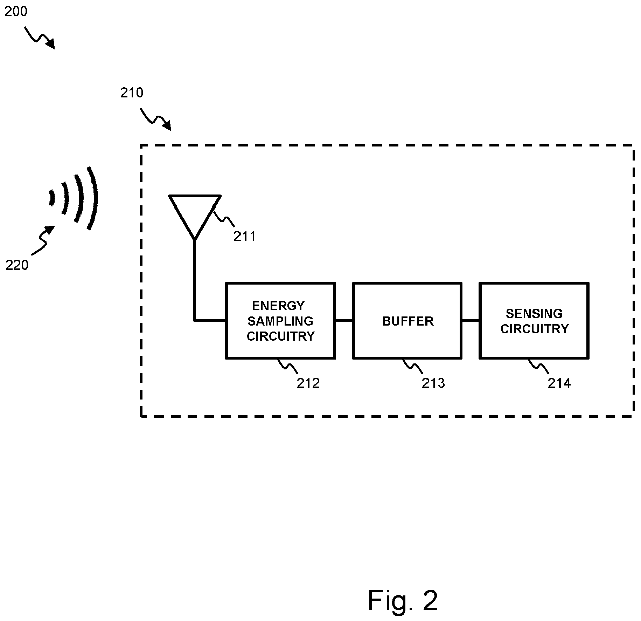

Fig. 2 shows a circuitry 210 for detecting at least one wireless network within range for communication according to an embodiment. The circuitry 210 comprises at least one antenna 211, an energy sampling circuitry 212, at least one buffer 213, and a sensing circuitry 214. The at least one antenna 211 may be any antenna such as, amongst others, a wire antenna, a log periodic antenna, a microstrip antenna, a reflector antenna, an external dipole antenna, a patch antenna, a lens antenna, a travelling-wave antenna, or an array antenna. The at least one antenna 211 may further be an omnidirectional antenna that receives a substantially equal energy from all directions, i.e. independent of the origin of a received signal 220. Alternatively, the antenna 211 may be a directional antenna that is optimized to receive energy from a predetermined direction, i.e. dependent on the origin of the received signal 220. The antenna 211 may be an omnidirectional antenna having a substantially rectangular shape with a length of at least around 1mm to at most around 60mm, a length of at least around 1mm to at most around 40mm, and a thickness of at least around 0.1mm to at most around 5mm.

The at least one antenna 211 is configured to receive a signal 220 within an operating frequency band characteristic for a wireless network. The signal 220 may be a radio signal or radio wave of a wireless telecommunications network. The wireless network may, for example, be a cellular network according to a 3GPP standard, a wireless local area network, WLAN, according to any IEEE 802.11 standard, or a wireless personal area network, WPAN, according to any IEEE 802.15 standard, a network based on the Thread protocol, a LoRaWAN network, or any other wireless network known to the skilled person.

The operating frequency band of a cellular network according to a 3GPP standard may, for example, be a Code-Division Multiple Access, CDMA, frequency band, a Global System for Mobiles, GSM, frequency band, a Universal Mobile Telecommunications Service, UMTS, frequency band, a Long-Term Evolution, LTE, frequency band, or a 5G New Radio, NR, frequency band. The operating frequency band of a WLAN according to an IEEE 802.11 standard may, for example, be a Wi-Fi 4 frequency band, a Wi-Fi 5 frequency band, a Wi-Fi 6 frequency band, a Wi-Fi 6E frequency band, a Wi-Fi 7 frequency band, a 60GHz Wi-Fi frequency band, a Wi-Fi Direct frequency band, or a Wi-Fi Protected Access frequency band. The operating frequency band of a WPAN according to an IEEE 802.15 standard may, for example, be a Bluetooth frequency band, a Bluetooth low energy, BLE, frequency band, or a Zigbee frequency band. It will further be apparent that antenna 211 may be configured to receive a signal within a portion of such an operating frequency band, i.e. one or more channels.

The signal 220 may be indicative for the presence of the wireless network, e.g. a beacon frame transmitted by an access point of a Wi-Fi network. The signal 220 may be characterized by a signal frequency within the operating frequency band of the at least one wireless network. For example, a signal indicative for the presence of a 2.4GHz Wi-Fi network may be characterized by a signal frequency between 2401 MHz and 2495 MHz. The operating frequency band for which the at least one antenna 211 receives signals 220 may be predetermined. In other words, the antenna 211 may be configured to continuously sense the surroundings for the presence of signals 220 within the predetermined operating frequency band.

To this end, the energy sampling circuitry 212 may comprise an impedance matching circuitry, also resonator circuitry, connected to the antenna 211. The resonant frequency of the impedance matching circuitry may be adjusted to the frequency of the desired wireless network, i.e. the operating frequency band. A radio signal 220 of the desired wireless network then makes the impedance matching circuitry resonate. Radio signals at substantially different frequencies may be blocked by the impedance matching circuitry. In doing so, the antenna 221 may be configured to capture signals of a specific operating frequency band.

The energy sampling circuitry 212 is configured to convert the received signal 220 into an electrical charge. This can, for example, be achieved by means of an impedance matching circuitry and a rectifier or voltage multiplier. Alternatively, a rectenna may be used that converts the electromagnetic energy of the signal 220 to direct current, e.g. a dipole antenna connected to a diode. The energy sampling circuitry 212 is further configured to store the electrical charge in the at least one buffer 213. In doing so, receiving a signal 220 by antenna 221 results in a measurable voltage on the buffer 213. The at least one buffer 213 may, for example, be a capacitor, a supercapacitor, a double-layer capacitor, a pseudo-capacitor, a hybrid capacitor, or any other energy buffer known to the skilled person.

Sensing circuitry 214 is configured to measure this resulting voltage, i.e. the electrical charge stored in the buffer 213, and to detect that a wireless network is within range for communication therefrom. This allows detecting wireless networks within range for communication in a substantial energy-neutral way, i.e. without consuming energy to probe or scan for the presence of wireless networks. The sensing circuitry 214 may consume a limited amount of energy to, for example, perform the measuring of the stored electrical charge. It is to be understood that this consumed energy may be substantially small compared to the energy typically consumed to probe or scan for the presence of wireless networks, and/or compared to the energy wasted by transmitting messages in vain, i.e. without an available network. Alternatively or complementary, the circuitry may at least partially be powered by the limited energy stored in the buffer 213, i.e. the electrical charge.

It is an advantage that this reduces the energy consumption to detect wireless networks, in particular compared to scanning or probing for available wireless networks. The circuitry 210 further allows to detect the at least one wireless network by sampling a limited amount of energy from the received signal 220. The energy sampled from the received signal 220 may, for example, be substantially smaller compared to the energy sampled in typical radio frequency power harvesting applications. For example, a power input level of around -100 dBm may be sufficient to detect a wireless network in range for communication by means of circuitry 210, while typical radio frequency power harvesting technologies require a power input level of around -20 dBm. This has the further advantage that the circuitry 210 can detect a wireless network substantially quick and/or from a substantially great distance from the source of the signal 220, e.g. a cellular base station or an access point. This further allows using a substantially compact antenna to receive signals, i.e. to detect wireless networks, as the sampled energy to detect a wireless network by means of the circuitry 210 is limited.

Detecting a wireless network within range for communication may further allow the circuitry 210 to initiate a joining procedure to join or connect with the detected wireless network, or to transmit a message over the detected wireless network. Alternatively, the circuitry 210 may further be configured to generate a control signal that triggers another device, system, or circuitry, e.g. a communication module, to connect with the detected wireless network. This has the further advantage that transmitting messages when no wireless network is available can be avoided, thereby further reducing energy consumption.

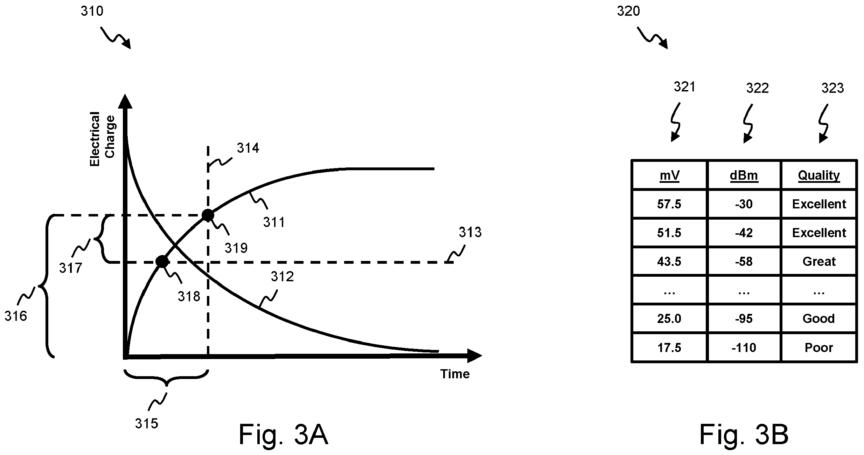

Fig. 3A shows an example embodiment of the electrical charge 310 stored in the at least one buffer. Upon receiving a signal by the antenna, the electrical charge 311 stored in the buffer may increase. This increase may continue in time while signals are received by the antenna and are subsequently converted to an electrical charge by the energy sampling circuitry. The stored electrical charge 311 may eventually approximate or reach a maximum value, e.g. when the buffer is a capacitor. The magnitude of the electrical charge 311 may be indicative for the strength of the received signal, a time period during which signals within the operating frequency band are received, and/or the number of received signals within the operating frequency band.

The sensing circuitry may further be configured to detect that the at least one wireless network is within range when the electrical charge 311 exceeds a minimum threshold 313. The minimum threshold 313 may thus be an electrical charge indicative for a minimum signal strength, a minimum time period during which signals are received, or a minimum number of received signals. Thus, an electrical charge 311 that exceeds the minimum threshold 313 may indicate that the signal strength of the wireless network is sufficiently strong, and/or that the wireless network has been in range for a sufficient amount of time. This allows to only initiate a network joining procedure to join the detected wireless network, or to only send a message over the wireless network, when the signal strength is sufficient, i.e. when the connection to the wireless network can be sufficiently performant. This may further allow to avoid joining the network when the wireless network is only within range for a short duration. This has the further advantage that it improves the energy efficiency of joining wireless networks as futile network joining procedures can be avoided, and/or that it improves the energy efficiency of communicating over wireless networks as failed transmissions can be avoided.

Alternatively or complementary, the sensing circuitry may further be configured to detect that the wireless network is within range based on a transient response 315 of the measured electrical charge 311. The wireless network may thus be detected based on a change in the electrical charge 311 of the buffer, i.e. based on the transient response 315 of the electrical charge 311. The at least one wireless network may, for example, be detected to be within range for communication when the electrical charge 311 increases by a predetermined voltage 316 within a predetermined period of time 315, or when a change of the electrical charge 311 per unit of time exceeds a threshold. This can allow to only initiate a network joining procedure or to only transmit a message when the wireless network is within range for communication for a sufficient period of time, further improving energy efficiency.

Alternatively or complementary, the sensing circuitry may further be configured to detect that the at least one wireless network is within range for communication based on a electrical charge difference 317. The wireless network may, for example, be detected to be within range for communication when the electrical charge 311 increase between a first measurement 318 and a second measurement 319 exceeds a threshold.

The at least one buffer may further be connected to a predetermined load, e.g. a resistor, that continuously discharges the buffer. In doing so, the stored electrical charge 312 in the buffer may be removed or reset if the signal of the wireless network is lost, i.e. when the wireless network is no longer within range. Alternatively, the buffer may periodically be connected to the predetermined load such that the buffer is discharged at substantially equal intervals.

The sensing circuitry may further be configured to determine a network quality of the at least one wireless network based on a predetermined mapping between the signal strength of the received signal and the measured electrical charge. Fig. 3B shows an example embodiment of a predetermined mapping 320 between the electrical charge measured on the buffer 321, the signal strength of the received signal 322, and the corresponding network quality 323 of the detected wireless network. The network quality 323 may, for example, be indicative for the stability and/or strength of the network. The sensing circuitry may thus be configured to determine the quality 323 or performance of the wireless network based on the electrical charge 321 stored in the buffer.

This allows to only initiate a network joining procedure to join the detected wireless network, or to only transmit a message, when the network quality 323 of the detected wireless network is sufficient. This has the further advantage that it further improves the energy efficiency of joining wireless networks and/or communicating over wireless networks.

The predetermined mapping 320 may be obtained by tuning or initializing the circuitry prior to the detecting of wireless networks by the circuitry, i.e. during a tuning step or initialization step prior to operation of the circuitry. Tuning or initializing the circuitry may comprise exposing the circuitry to one or more benchmark signals. The one or more benchmark signals may be characterized by a predetermined frequency and respective predetermined signal strengths. In other words, the benchmark signals may have substantially different signal strengths. Exposing the circuitry to such a benchmark signal results in an electrical charge on the buffer of the circuitry. By mapping the known signal strength and the resulting electrical charge, a look-up table may be generated, i.e. the predetermined mapping 320. Alternatively or complementary, a relationship, e.g. a regression or a function, may be determined between the signal strength 322 and the electrical charge 321 based on the mapped results of the tuning step.

The predetermined mapping 320 may be characterized by the antenna, the buffer, and the energy sampling circuitry. In other words, the predetermined mapping 320 may be characterized by the electronic components included in the circuitry. The predetermined mapping 320 may further be substantially independent of the frequency of the received signal, and thus independent of the operating frequency band of the detected wireless network. This can allow the circuitry to detect any wireless network within range for communication by tuning the circuitry for at least one frequency band.

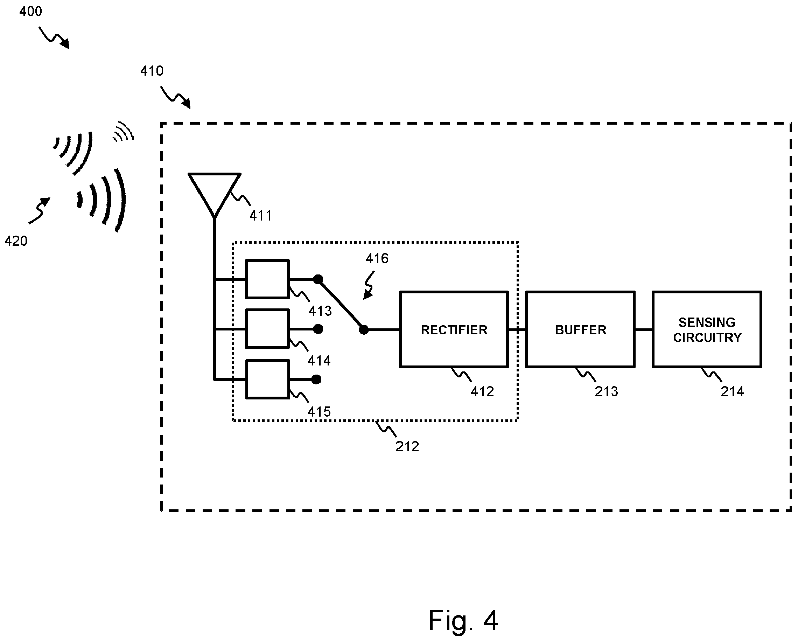

Fig. 4 shows a circuitry 410 configured to detect a plurality of wireless networks within range for communication, according to an embodiment. To this end, the energy sampling circuitry 212 of circuitry 410 may comprise a tuneable antenna 411 that can be adjusted to receive signals 420 within different operating frequency bands. In other words, the tuneable antenna 411 may be tuned to receive signals 420 of different wireless networks. The operating frequency bands monitored by the tuneable antenna 411 may be determined by a plurality of matching networks 413, 414, 415, i.e. impedance matching circuitries, connected to the tuneable antenna 411.

The resonant frequency of the respective matching networks 413, 414, 415 may be adjusted to the respective operating frequency bands of the different wireless networks, e.g. the resonant frequencies of the respective matching networks 413, 414, 415 may be set to the respective centre frequencies of different operating frequency bands. In doing so, a radio signal 420 within the operating frequency band of any of the plurality of wireless networks may result in electrical resonance of the corresponding matching network 413, 414, 415.

The tuneable antenna 411 may then be tuned to detect a wireless network within range for communication having a certain operating frequency band, by connecting a rectifier 412 to the corresponding matching network 413, 414, 415, e.g. by means of a switch 416. For example, matching network 413 may be configured to resonate at around 2100 MHz which allows to detect signals 420 of a LTE network, matching network 414 may be configured to resonate at around 5240 MHz which allows to detect signals 420 of a 5GHz Wi-Fi network, and matching network 415 may be configured to resonate at around 2426 MHz which allows to detect signals 420 of a BLE network. The wireless network that can be detected by the circuitry 411 is then determined by the matching network 413, 414, 415 that is connected to the rectifier 412 by means of switch 416. Switching between the different matching networks 413, 414, 415 may be performed at predetermined time intervals. The predetermined time intervals may, but need not, be substantially equal. The switching may further be performed in a predetermined order, or in a random order. Alternatively or complementary, the circuitry 410 may further be configured to select a matching network 413, 414, 415 based on a control signal, e.g. a control signal indicative of the geographical location of the circuitry 410. This may allow biasing the detection of a wireless network which may, for example, be expected to be present based on the geographical location of the circuitry 410. The circuitry 410 may further be configured to determine which of the plurality of wireless networks is detected, i.e. to identify the detected wireless network, based on the operating frequency band wherein a signal 420 is received. This may, for example, be achieved by identifying which matching network 413, 414, 415 is connected to the rectifier 412 upon receiving a signal 420.

This has the further advantage that the circuitry 410 can be configured to detect wireless networks in different geographical regions, as the commonly used operating frequency bands for telecommunication networks may vary across the globe. For example, in Europe, LTE networks commonly use the 2100 MHz, 1800 MHz, 2600 MHz, and 900 MHz operating frequency band; while in the United States, LTE networks commonly use the 1900 MHz, 850 MHz, and 700 MHz operating frequency band. This allows the circuitry 410 to operate globally without substantial reconfiguration, e.g. when travelling from Europe to the United States.

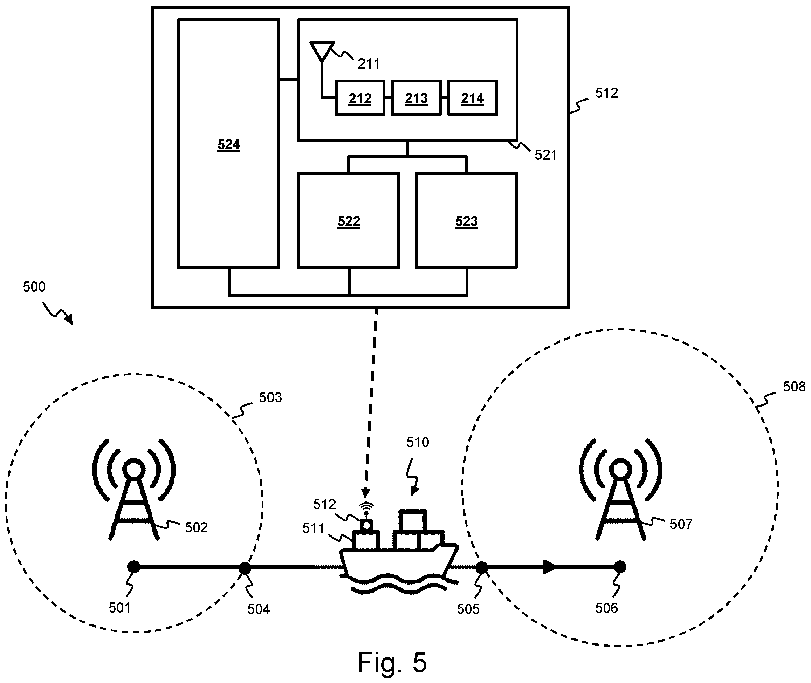

Fig. 5 shows an example embodiment of a tracking device 512 comprising the circuitry 521 for detecting at least one wireless network within range for communication. Circuitry 521 may be circuitry 210 or 410 as described above in relation to Fig. 2 and Fig. 4, respectively. Tracking device 512 may further comprise a communication module 522 for communicating spatial information over a wireless network. The spatial information or data may include the current geographical location of the tracking device, and/or a set of geographical locations of the tracking device at previous timesteps, i.e. a history of geographical locations of the tracking device. The tracking device 512 may further transmit any other information or data over the wireless network. Tracking device 512 may, for example, be an Internet of Things, loT, device that connects to a wireless network to transmit this information or data. As such, connecting or associating the tracking device 512 with a moving asset allows tracking the location and movement of the asset. The tracking device 512 may, for example, be mounted to a freight container transported by a vessel, cargo transported by an airplane, or a package transported by a truck.

The tracking device 512 may further comprise at least one additional circuitry 523 configured to perform operations such as, for example, data acquisition, executing commands, or determining the geographical location of the tracking device 512. The tracking device 512 may further comprise an energy storage device 524 such as, for example, a primary battery, a secondary battery, a supercapacitor, a capacitor, or any other energy storage device known to the skilled person. The energy storage device 524 may supply energy to, i.e. power, the communication module 522 and/or the at least one additional circuitry 523.

The energy storage device 524 may further supply a limited amount of energy to circuitry 521, e.g. to power the sensing circuitry 214. It is to be understood that this energy may be substantially small compared to the energy typically consumed to probe or scan for the presence of wireless networks, and/or compared to the energy wasted by transmitting messages in vain, i.e. without an available network. In other words, sensing circuitry 214 may consume a limited amount of energy from the energy storage device 524 to, for example, perform the measuring of the stored electrical charge in the buffer 213. This allows detecting wireless networks within range for communication in a substantial energy-neutral and energy efficient way. This further allows limiting the energy consumption of the tracking device 512, thereby prolonging the lifetime of the energy storage device 524. It is thus a further advantage that the cost of the tracking device 512 can be reduced as the reduced energy consumption allows using an energy storage device 524 with a smaller battery capacity. Alternatively, sensing circuitry 214 may at least partially be powered by the limited energy stored in the buffer 213, i.e. the electrical charge. This may further improve the energy efficiency of tracking device 512.

As such, the communication module 522 may only consume energy for communicating with, or joining a wireless network when the circuitry 521 detects a wireless network within range for communication. The communication module 522 may further operate in a standby mode until circuitry 512 detects a suitable wireless network within range for communication. The standby mode may be an operational state of the communication module 522 wherein the module conserves power. Typical communication modules in tracking devices cannot operate in such an energy-saving state, or can only conserve a limited amount of power, as the modules consume energy to probe and scan for wireless networks. Upon detection of a wireless network by circuitry 512, the communication module 522 may be woken up from the standby mode, e.g. by means of a control signal generated by circuitry 512.

Fig. 5 further shows an example 500 wherein the tracking device 512 is mounted to a freight container 511 that is transported by a vessel 510 from a departure point 501 to a destination 506. Tracking device 512 may be configured to periodically transmit spatial information over a wireless network within range for communication. As such, the associated freight container 511 may be tracked in space.

A first wireless network may be available for communication within a coverage area 503 from a base station 502 located near the departure point 501, e.g. the harbour of departure. Base station 502 may for example, amongst others, be a cellular base station or an access point. While the vessel 510 travels within the coverage area 503 of the first wireless network, circuitry 521 detects that the first wireless network is within range for communication and the tracking device 512 may transmit spatial information. Upon leaving coverage area 503, i.e. at point 504, it may no longer be possible to transmit data over the first wireless network. Circuitry 521 may detect that the first wireless network is no longer within range for communication. As such, at least a portion of the tracking device 512, e.g. the communication module 522, may be configured to start operating in a standby mode to conserve energy. Circuitry 521 keeps detecting, in an energy-efficient way, whether a wireless network is within range while vessel 510 travels between point 504 and 505, e.g. a leg of the journey across open sea.

A second wireless network may be available for communication within a coverage area 508 from a base station 507 located near the destination 506, e.g. the harbour of destination. Upon entering coverage area 508, the circuitry 521 may detect the second wireless network and may wake up the communication module 522, and/or any other portion of the tracking device 512, from the standby mode. For example, communication module 522 may be woken up first to initiate a joining procedure to connect to the second wireless network. Upon successful connection with the network, the additional circuitry 523 may be woken up to acquire spatial information on the tracking device 512. The presence of a wireless network detected by circuitry 512 may further allow determining whether the tracking device 512, i.e. the freight container, is at sea or near land.

Tracking device 512 may further be mounted on the inside or outside of the freight container 511. When mounting the tracking device 512 on the inside of the freight container 511, the circuitry 521 may further be configured to determine whether the doors of the freight container are open or closed. Opening or closing of the doors may be detected based on a change in the signal strength of the received signal.

Tracking device 512 may further be configured to prevent interference between the messages sent by the tracking device 512 and a critical wireless network. A critical wireless network may, for example, be a telecommunications network of emergency services, first responders, law enforcement, medical services, aeronautical services, or any other essential communications network known by the skilled person. Upon detection of such a critical wireless network, the circuitry 521 may supress communication by the communication module 522. This supressing may include preventing the communication module 522 to transmit messages over the critical wireless network, to join the critical wireless network, and/or to transmit messages over another wireless network that may interfere with the critical wireless network.

This may, for example, occur when the tracking device 512 is mounted to cargo transported by an airplane. Airplanes typically make use of aeronautical communication services, e.g. automatic dependent surveillance-broadcast, ADS-B, to broadcast or communicate with other airplanes and/or ground control. Circuitry 521 may thus supress communication by the communication module 522 upon detecting such an ADS-B broadcast signal to prevent interference therewith to avoid safety issues. Additionally, detection of such an ADS-B signal may allow the tracking device 512 to determine that the tracking device, i.e. the associated cargo, is inside or near an airplane.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more, or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. A circuitry (210) for detecting at least one wireless network within range for communication, wherein the at least one wireless network is **characterized by** an operating frequency band; the circuitry comprising:
- at least one antenna (211) configured to receive a signal (220) within the operating frequency band;
- an energy sampling circuitry (212) configured to convert the received signal into an electrical charge, and to store the electrical charge in at least one buffer (213); and
- a sensing circuitry (214) configured to measure the stored electrical charge in the at least one buffer, and to detect that the at least one wireless network is within range for communication based on the measured electrical charge.

2. The circuitry according to claim 1, wherein the sensing circuitry (214) is further configured to detect that the at least one wireless network is within range when the measured electrical charge (311) exceeds a minimum threshold (313).

3. The circuitry according to any of the preceding claims, wherein the sensing circuitry (214) is further configured to detect that the at least one wireless network is within range based on a transient response (315, 317) of the measured electrical charge (311).

4. The circuitry according to any of the preceding claims, wherein the sensing circuitry (214) is further configured to determine a network quality of the at least one wireless network based on the measured electrical charge (311).

5. The circuitry according to claim 4, wherein the received signal (220) is further **characterized by** a signal strength; and wherein the sensing circuitry (214) is further configured to determine the network quality (323) based on a predetermined mapping (320) between the signal strength (322) of the received signal and the measured electrical charge (321).

6. The circuitry according to claim 5, wherein the predetermined mapping (320) is **characterized by** the at least one antenna (211), the at least one buffer (213), and the energy sampling circuitry (212).

7. The circuitry according to any of the preceding claims, wherein the at least one antenna (411) is tuneable to receive signals (420) within different operating frequency bands; and wherein the circuitry (410) is further configured to detect a plurality of wireless networks by tuning the at least one antenna (411) to receive signals within the respective operating frequency bands; and wherein the circuitry is further configured to identify the detected wireless networks.

8. The circuitry according to claim 7, wherein the energy sampling circuitry (212) further comprises a rectifier (412) and a plurality of matching networks (413, 414, 415), wherein the respective matching networks are configured to match an impedance of the at least one antenna (411) with an impedance of the rectifier (412); and wherein the energy sampling circuitry is further configured to switch between the respective matching networks to tune the at least one antenna to receive signals within the respective operating frequency bands.

9. The circuitry according to any of the preceding claims, wherein the at least one antenna (211, 411) is an omnidirectional antenna, the at least one buffer (213) is a capacitor, and wherein the sensing circuitry (214) is further configured to measure a voltage of the capacitor.

10. The circuitry according to any of the preceding claims, wherein the at least one antenna (211, 411) has a substantially rectangular shape having a length of at least around 1mm to at most around 60mm, a length of at least around 1mm to at most around 40mm, and a thickness of at least around 0.1mm to at most around 5mm.

11. The circuitry according to any of the preceding claims, wherein the operating frequency band is a cellular frequency band according to a 3GPP standard, a frequency band according to an IEEE 802.11 standard, and/or a frequency band according to an IEEE 802.15 standard.

12. A tracking device (512) comprising a communication module (522) for communicating spatial information over a wireless network; and comprising the circuitry (521) according to any of claims 1 - 11 to detect a wireless network within range for communication.

13. The tracking device according to claim 12, wherein the circuitry (521) is further configured to power up the communication module (522) from a standby mode upon detecting at least one wireless network within range for communication.

14. The tracking device according to claim 12, wherein the circuitry (521) is further configured to prevent interference between the communication of the tracking device (512) and a critical wireless network by supressing communication by the communication module (522) upon detecting that the critical wireless network is within range.
